# EUROPÄISCHE PATENTANMELDUNG

(11) **EP 3 332 968 A1**
(43) Veröffentlichungstag der Anmeldung: **13.06.2018**
(21) Anmeldenummer: 17200250.3
(22) Anmeldetag: 07.11.2017
(51) Int. Cl.: B41J 2/165, B41J 2/21, B41J 29/393

(54) **VERFAHREN UND TESTMUSTER ZUR DETEKTION UND KOMPENSATION AUSGEFALLENER DRUCKDÜSEN IN EINER INKJET-DRUCKMASCHINE**

(30) Priorität: 07.12.2016 DE 102016224303
(71) Anmelder: Heidelberger Druckmaschinen AG, 69115 Heidelberg (DE)
(72) Erfinder: Trachanas, Dr. Ilias, 68723 Plankstadt (DE); Wolf, Dr. Burkhard, 69221 Dossenheim (DE)

(57) **Zusammenfassung**

Druckdüsentestmuster (11) für eine Inkjetdruckmaschine (19), welches aus einem ersten Element (9) mit einer bestimmten Anzahl horizontaler Zeilen periodisch vertikal gedruckter, gleichabständiger Linien (12) besteht, die untereinander angeordnet sind, wobei in jeder Zeile des ersten Elements des Düsentestmusters (9) jeweils nur periodisch die Druckdüsen des Druckkopfes (5) der Inkjetdruckmaschine (19) zum ersten Element des Düsentestmusters (9) beitragen, die der bestimmten Anzahl der horizontalen Zeilen entsprechen und wobei das Düsentestmuster (11) zusätzlich ein zweites Element (10) mit Streifen unterschiedlicher Flächendeckungen (14) enthält und welches dadurch gekennzeichnet ist, dass die Streifen unterschiedlicher Flächendeckungen (14) des zweiten Elementes des Düsentestmusters (10) mit mehreren verwendeten Prozessfarben realisiert sind, wobei dies den Druck mehrerer zweiter Elemente des Düsentestmusters (10) für jeweils mehrere der verwendeten Prozessfarben beinhaltet und/oder den Druck eines zweiten Elementes des Düsentestmusters (10) durch Übereinanderdruck mehrerer der verwendeten Prozessfarben.

## Beschreibung

Die vorliegende Erfindung betrifft ein Verfahren und ein Testmuster zur Detektion und Kompensation ausgefallener Druckdüsen in einer Inkjet-Druckmaschine mittels eines Rechners.

Die Erfindung liegt im technischen Bereich des Digitaldrucks.

Im Bereich des Digitaldrucks gibt es verschiedene technische Ansätze zur Realisierung. Einer der verbreitetsten Ansätze ist der sogenannte Inkjetdruck. Die entsprechenden Inkjet-Druckmaschinen besitzen einen oder mehrere Druckköpfe, welche wiederum über eine Vielzahl einzelner Druckdüsen verfügen, über welche die eingesetzte Tinte auf das verwendete Drucksubstrat aufgebracht wird. Jeder Druckkopf verwendet dabei üblicherweise Tinten einer bestimmten Druckfarbe. Ein verbreitetes Problem bei dieser Art von Technik ist es, dass einzelne Druckdüsen ausfallen können oder nur noch teilweise funktionieren. Dies kann zum Beispiel durch eine Verstopfung der einzelnen Druckdüsen passieren, wodurch dann diese Druckdüse nur noch einen Teil der eigentlich vorgesehenen Tinte abgeben kann, diesen Teil zudem in einer unerwünschten Richtung oder im Extremfall gar keine Tinte mehr abgibt. Da eine Reinigung dieser Verstopfungen extrem aufwändig ist und zudem ein Ausfall einer einzelnen Druckdüse auch nicht immer durch eine Verstopfung verursacht werden muss, ist es zwangsläufig erforderlich, ausgefallene Druckdüsen, sogenannte missing nozzles, zum einen zu erkennen und zum anderen mit möglichst geringem Aufwand derart zu kompensieren, dass die zu erreichende Druckqualität möglichst wenig beeinflusst wird.

Zum Erkennen von missing nozzles gibt es im Stand der Technik wiederum verschiedenste Ansätze. Der gebräuchlichste Ansatz ist sicherlich das Drucken sogenannter Düsentestmuster, durch deren möglichst automatisierte Auswertung missing nozzles zielsicher erkannt und hinsichtlich ihrer Position im Druckkopf lokalisiert werden können.

Ein aus dem Stand der Technik bekannter Ansatz für ein solches Düsentestmuster ist es zum Beispiel, in einer horizontalen Zeile periodisch vertikal gedruckte gleichabständige Linien zu drucken. Dabei wird in dieser horizontalen Zeile nur jede x-te, zum Beispiel jede zehnte Druckdüse, für den Druck einer solchen vertikalen Linie eingesetzt. Dies ist notwendig, da die zur Auswertung des gedruckten Düsentestmusters verwendeten Sensoren, zum Beispiel RGB-Kameras, aktuell noch über eine geringere Auflösung verfügen, als die zum Druck verwendeten Inkjet-Druckköpfe. Druckt nun zum Beispiel in einer horizontalen Zeile jede zehnte Druckdüse, beginnend mit der ersten Druckdüse, weiter mit der Elften usw., so muss das gesamte Düsentestmuster logischerweise zehn horizontale Zeilen umfassen, um sämtliche vorhandenen Druckdüsen des Druckkopfes zu erfassen. In jeder folgenden horizontalen Zeile wird dann jeweils die nächstliegende Druckdüse, in diesem Fall die Zweite, Zwölfte usw, die vertikale Linie abbilden. Man erhält so ein Druckdüsentestmuster bestehend aus zum Beispiel zehn horizontalen Zeilen, in welchen jede Druckdüse des Druckkopfes mindestens eine vertikale Linie gedruckt hat. Durch Aufnahme dieses Druckdüsentestmusters mittels einer Kamera und Auswertung der einzelnen vertikalen Linien lassen sich dann ausgefallene oder nur teilweise, beziehungsweise schräg spritzende Druckdüsen zielsicher erkennen und lokalisieren.

Derart detektierte missing nozzles müssen dann entsprechend kompensiert werden, um negative Auswirkungen auf das zu erzeugende Druckbild auszuschließen. Dafür sind aus dem Stand der Technik wiederum verschiedene Ansätze bekannt. Diese Ansätze umfassen den Einsatz redundanter Druckdüsen und/oder Druckköpfe, bekannt aus der US-Patentanmeldung US 2006 0256 157 A1, die Kompensation ausgefallener Druckdüsen durch die Druckdüsen in einem anderen Druckkopf mit einer anderen Farbe an derselben Stelle, bekannt aus dem US-Patent US 7762643 B2 und als wichtigsten Ansatz die Kompensation einer missing nozzle durch benachbarte Druckdüsen, so wie es aus der US-Patentanmeldung US 2006 0125 850 A1 bekannt ist.

Alle diese Kompensationsverfahren haben bestimmte Vor- und Nachteile. So ist der Einsatz redundanter Druckdüsen mit einem erhöhten Konstruktionsaufwand für die entsprechende Druckmaschine bzw. den entsprechenden Druckkopf verbunden, während der Einsatz von Druckdüsen eines anderen Druckkopfs mit anderer Farbe zur Kompensation einer missing nozzle an gleicher Stelle in der Regel Einbußen in der Druckqualität nach sich zieht. Die Kompensation durch benachbarte Druckdüsen, bei denen die benachbarten Druckdüsen entsprechend mehr Tinte einsetzen, um somit die zwischen ihnen gelagerte white line der missing nozzle zu schließen, kann wiederum bei einer Überkompensation zu sogenannten black lines führen. Zudem gibt es auch Auswirkungen auf Druckgeschwindigkeit sowie die allgemeine mögliche Druckqualität. Auch mehrere nebeneinanderliegende missing nozzles können für diesen Ansatz ein Problem darstellen.

Aufgrund all dieser Nachteile für die bestehenden Kompensationsverfahren, die bei deren Einsatz auftreten, wäre es für einen effizienten Betrieb in möglichst optimaler Druckqualität einer Inkjet-Druckmaschine äußerst vorteilhaft, den Einsatz dieser Kompensationsverfahren so gering wie möglich zu halten und bevorzugt nur dann durchzuführen, wenn eine Kompensation von missing nozzles auch wirklich notwendig ist. Um diesen Punkt entsprechend umzusetzen, sind aus dem Stand der Technik Verfahren bekannt, die das jeweils zu erzeugende Druckbild dahingehend untersuchen, ob Bereiche vorhanden sind, in denen der Ausfall einer oder mehrerer Druckdüsen derart irrelevant ist, dass eine Kompensation dieser Druckdüsen nicht erforderlich ist.

Einer dieser Ansätze ist aus dem europäischen Patent EP 043 76 48 B1 bekannt. Dort wird ein Verfahren zur Bildfehlererkennung mittels Bildanalyse offenbart, in welchem nach einer Digitalisierung des Druckbildes die Zeilen und Spalten desselben erfasst werden, anhand derer das Druckbild in unbedruckte und bedruckte Bildteile unterteilt wird. Für diese unbedruckten und bedruckten Bildteile werden dann sogenannte Durchschnittsbildelemente berechnet. Anhand eines Abgleichs der so berechneten Durchschnittsbildelemente jeweils für unbedruckte und bedruckte Bildteile lassen sich dann Bildfehler erkennen, indem zum Beispiel bekannt ist, dass sich ein Durchschnittskennwert eines Bildelementes in einem unbedruckten Bereich von dem Durchschnittskennwert eines Bildelementes in einem bedruckten Bereich unterscheiden sollte. Ist dies nicht der Fall, kann von einem Druckfehler im bedruckten Bildteil ausgegangen werden.

Ein weiterer, aus dem Stand der Technik bekannter Ansatz ist das Bewerten des Druckbildinhaltes anhand von Bildkennwerten entlang sogenannter Druckdüsenpfade. Dabei wird das Druckbild in Druckrichtung entlang von Druckdüsenpfaden, die eine oder mehrere Druckdüsen umfassen können, auf seine Bildeigenschaften untersucht. Diese Bildeigenschaften in Form von Bildkennwerten werden dann zu einer Kennwertlinie zusammengefasst, welche sich anhand von Parametern wie der Flächendichte, der verwendeten Farben, der Bildinformationen, wie zum Beispiel Texte oder Bilder, und weiterer Parameter zusammensetzt. Übersteigt die Kennwertlinie entlang des Druckdüsenpfades einen festgelegten Grenzwert, so wird dieser Druckdüsenpfad mit den davon betroffenen Druckdüsen als relevant betrachtet. Das bedeutet im Endeffekt, dass wenn diese oder eine dieser Druckdüsen ausfallen, diese auch kompensiert werden müssen. Wird der entsprechende Druckdüsenpfad als nicht relevant gekennzeichnet, so ist keine Kompensation erforderlich.

Vorteil dieser Ansätze ist, dass nicht sämtliche detektierten missing nozzles auch kompensiert werden müssen. Der Nachteil dieser Ansätze ist jedoch, dass die Bewertung der Relevanz der Druckdüsen immer nur für das aktuelle Druckbild gilt. Ändert sich das zu erzeugende Druckbild, so muss eine völlig neue Relevanzanalyse durchgeführt werden, was einen entsprechenden erhöhten Aufwand nach sich zieht.

Die Aufgabe der vorliegenden Erfindung ist es somit, eine Möglichkeit zu finden missing nozzles zu detektieren und hinsichtlich ihrer Relevanz zu bewerten, ohne fortlaufend das zu erzeugende Druckbild analysieren zu müssen.

Die Lösung dieser Aufgabe stellt ein Druckdüsentestmuster für eine Inkjetdruckmaschine, welches aus einem ersten Element mit einer bestimmten Anzahl horizontaler Zeilen periodisch vertikal gedruckter, gleichabständiger Linien besteht, die untereinander angeordnet sind, wobei in jeder Zeile des ersten Elements des Düsentestmusters jeweils nur periodisch die Druckdüsen des Druckkopfes der Inkjetdruckmaschine zum ersten Element des Düsentestmusters beitragen, die der bestimmten Anzahl der horizontalen Zeilen entsprechen und wobei das Düsentestmuster zusätzlich ein zweites Element mit Streifen unterschiedlicher Flächendeckungen enthält und welches dadurch gekennzeichnet ist, dass die Streifen unterschiedlicher Flächendeckungen des zweiten Elementes des Düsentestmusters mit mehreren verwendeten Prozessfarben realisiert sind, wobei dies den Druck mehrerer zweiter Elemente des Düsentestmusters für jeweils mehrere der verwendeten Prozessfarben beinhaltet und/oder den Druck eines zweiten Elementes des Düsentestmusters durch Übereinanderdruck mehrerer der verwendeten Prozessfarben. Im erfindungsgemäßen Druckdüsentestmuster befindet sich zusätzlich zu dem aus dem Stand der Technik bekannten ersten Element von in horizontalen Zeilen periodisch angeordneten, vertikal gedruckten gleichabständigen Linien, an deren Erzeugung jeweils sämtliche Druckdüsen des Inkjet-Druckkopfes beteiligt sind, zusätzlich ein zweites Element. Dieses zweite Element enthält Streifen mit jeweils unterschiedlichen Flächendeckungen. Dies führt dazu, dass bei einer mit Hilfe des ersten Elementes detektierten missing nozzle, dessen Lage anhand der Auswertung des ersten Elementes bekannt ist, anhand der damit ebenfalls bekannten Lage in den Streifen mit unterschiedlichen Flächendeckungen die Auswirkungen dieser missing nozzle für die jeweils aufgeführten unterschiedlichen Flächendeckungen genau beurteilt werden können. So ermöglicht das zweite Element die genaue Bewertung der von der missing nozzle verursachten Bildstörung für die jeweils verwendeten Flächendeckungen. Damit lässt sich direkt ableiten, bei welchen Flächendeckungen für die verwendete Tinte, bzw. Druckfarbe eine Kompensation der jeweils ausgefallenen missing nozzle für diesen Inkjetdruckkopf notwendig ist. Eine direkte Bewertung zu erzeugender Druckbilddaten ist bei Verwendung des erfindungsgemäßen Druckdüsentestmusters nicht mehr notwendig. Lediglich die Information, welche Flächendeckungen mit welchen Druckdüsen im Druckbetrieb verwendet werden sollen, ist notwendig. Die Auswertung des erzeugten zweiten Elementes mit den Streifen unterschiedlicher Flächendeckungen kann dabei sowohl manuell vom Drucker als auch bevorzugt automatisiert mit Hilfe eines Sensors bzw. einer Kamera mit anschließender rechnergestützten Auswertung der erfassten Daten bzw. Bilddaten durchgeführt werden. Da in der Praxis meist mehrere Prozessfarben gleichzeitig verwendet werden, sollten die entsprechenden zweiten Elemente des Druckdüsentestmusters auch jeweils sämtliche verwendeten Prozessfarben umfassen. Dabei ist es naheliegend, mehrere zweite Elemente des Düsentestmusters zu verwenden, wobei für jede verwendete Prozessfarbe ein zweites Element des Düsentestmusters erzeugt wird. Es können jedoch auch sämtliche verwendeten Prozessfarben übereinander in ein einziges zweites Element gedruckt werden, oder auch in einem zweiten Element nur ein Teil der verwendeten Prozessfarben übereinander gedruckt werden und dann eventuell in einem weiteren zweiten Element eine andere Mischung der verwendeten Prozessfarben. Welche dieser Vorgehensweisen verwendet wird, hängt vom jeweiligen Anforderungsprofil der jeweiligen Druckmaschine bzw. des Druckprozesses ab. Dies gilt ebenfalls für eine in gleicher Weise vorgenommene Kombination der verwendeten Prozessfarben für das erste Element des Druckdüsentestmusters. Die Auswertung eines solchen vielfarbigen zweiten Elements des Druckdüsentestmusters, insbesondere im Falle des Übereinanderdrucks mehrerer verwendeter Prozessfarben, ist wesentlich komplexer als im Falle eines monochromatischen zweiten Elementes des Druckdüsentestmusters. Sie ermöglicht jedoch eine vollständige Bewertung der Relevanz von missing nozzles im Mehrfarben-Inkjetdruck, da nur so sämtliche mögliche Prozessfarbenkombinationen bewertet werden.

Bevorzugte Weiterbildungen des erfindungsgemäßen Druckdüsentestmusters ergeben sich aus den zugehörigen Unteransprüchen sowie aus der Beschreibung und den zugehörigen Zeichnungen.

Eine bevorzugte Weiterbildung des erfindungsgemäßen Druckdüsentestmusters ist dabei, dass das zweite Element des Düsentestmusters mit den Streifen unterschiedlicher Flächendeckungen direkt oberhalb oder unterhalb des ersten Elements des Düsentestmusters gedruckt wird und dass die gleiche Breite orthogonal zur Druckrichtung wie das erste Element des Düsentestmusters aufweist. Um eine leichtere und somit effizientere Auswertung, sei es manuell oder automatisiert, des Druckdüsentestmusters zu ermöglichen, sollte das zweite Element direkt oberhalb oder unterhalb des ersten Elementes des Düsentestmusters gedruckt werden. Damit eine Zuordnung einer mittels des ersten Elementes des Düsentestmusters ermittelten missing nozzle zu einem potentiell von dieser missing nozzle verursachten Druckbildartefakt im zweiten Element des Düsentestmusters möglich ist, sollte dieses die gleiche Breite besitzen oder genau zur Druckrichtung wie das erste Element des Düsentestmusters ausgerichtet sein. Nur durch die genaue Zuordnung zwischen missing nozzle und entsprechender Auswirkung für die verschiedenen Flächendeckungen im zweiten Element ist eine korrekte Bewertung der Relevanz der missing nozzles für die verschiedenen Flächendeckungen möglich.

Eine bevorzugte Weiterbildung des erfindungsgemäßen Druckdüsentestmusters ist dabei, dass im zweiten Element des Düsentestmusters die Streifen unterschiedlicher Flächendeckungen in absteigender oder aufsteigender Flächendeckung untereinander angeordnet sind. Zwar ist es theoretisch möglich, die Streifen mit jeweils verschiedenen Flächendeckungen beliebig nacheinander anzuordnen, doch ist eine aufsteigende oder absteigende Anordnung der unterschiedlichen Flächendeckungen für eine möglichst effiziente Auswertung sinnvoll.

Eine weitere bevorzugte Weiterbildung des erfindungsgemäßen Druckdüsentestmusters ist dabei, dass im zweiten Element des Düsentestmusters die Streifen unterschiedlicher Flächendeckungen als Flächendeckungskeil mit beliebig vielen Flächendeckungswerten ausgeführt werden. Alternativ zu einer Anordnung direkt oberhalb oder unterhalb des ersten Elementes des Düsentestmusters mit gleicher Breite, orthogonal zur Druckrichtung wie das erste Element des Düsentestmusters und angeordnet in absteigender oder aufsteigender Flächendeckung für unterschiedliche Flächendeckungen kann auch ein Flächendeckungskeil mit beliebig vielen Flächendeckungswerten verwendet werden. Dieser ermöglicht eine größere Auswahl verschiedener Flächendeckungen auf der gleichen Fläche wie eine streifenförmige Anordnung.

Eine weitere bevorzugte Weiterbildung des erfindungsgemäßen Druckdüsentestmusters ist dabei, dass die Streifen unterschiedlicher Flächendeckungen des zweiten Elementes des Düsentestmusters von sämtlichen vorhandenen Druckdüsen des jeweiligen Druckkopfes erzeugt werden müssen. Nur wenn sämtliche vorhandenen Druckdüsen des jeweiligen Druckkopfes, die konsequenterweise alle am ersten Element des Druckdüsentestmusters beteiligt sind, auch die Streifen mit unterschiedlichen Flächendeckungen im zweiten Element drucken, ist eine vollständige Bewertung aller potentiellen missing nozzles möglich.

Eine weitere erfindungsgemäße Lösung der gestellten Aufgabe ist zudem ein Verfahren zur Detektion und Kompensation ausgefallener Druckdüsen in einer Inkjet-Druckmaschine mit einem Rechner, welches die folgenden Schritte umfasst:
1. Druck eines Düsentestmusters in einer seiner bereits vorgestellten Varianten.
2. Messung des gedruckten Düsentestmusters durch einen optischen Sensor und Auswertung des gemessenen Düsentestmusters durch den Rechner, wobei anhand des ersten Elements des Düsentestmusters ausgefallene Druckdüsen detektiert und hinsichtlich ihrer Position im Druckkopf identifiziert werden.
3. Rechnergestützte Bewertung, ob detektierte ausgefallene Druckdüsen für ein aktuelles Druckbild relevant sind, wobei für jeden Streifen unterschiedlicher Flächendeckungen im zweiten Element des Düsentestmusters untersucht wird, ob Auswirkungen der detektierten ausgefallenen Druckdüsen auf das Druckbild bei entsprechender Flächendeckung vorhanden sind.
4. Markierung der detektierten ausgefallenen Druckdüsen als relevant durch den Rechner, die im jeweils aktuellen Druckbild relevante Flächendeckungen drucken.
5. Kompensation der als relevant bewerteten detektierten ausgefallenen Druckdüsen für das aktuelle Druckbild.

In diesem erfindungsgemäßen Verfahren, in welchem das erfindungsgemäße Druckdüsentestmuster mit beiden Elementen verwendet wird, kann für die verschiedenen verwendeten Flächendeckungen rechnergestützt bewertet werden, ob eine mittels des ersten Elementes des Druckdüsentestmusters detektierte missing nozzle auch wirklich für alle verwendeten Flächendeckungen relevant ist. Für den Fall eines Mehrfarbendrucks wird dafür auch die entsprechende Relevanz der missing nozzle für die jeweilige Flächendeckung der jeweiligen Prozessfarbe, bzw. der entsprechenden Farbkombination, bewertet. Nur wenn die rechnergestützte Bewertung eine Relevanz der missing nozzle für diese Flächendeckung ergibt, wird diese im weiteren Druckprozess auch wirklich gemäß den aus dem Stand der Technik bekannten Verfahren zur Kompensation ausgefallener missing nozzles entsprechend kompensiert. Nicht relevante missing nozzles werden nicht kompensiert. Damit ergibt sich gegenüber den aus dem Stand der Technik bekannten Verfahren zur Kompensation ausgefallener Druckdüsen ein entsprechender Effizienzgewinn. Weder werden irrelevante ausgefallene Druckdüsen kompensiert, noch ist für jedes neu zu erzeugende Druckbild eine erneute Relevanzbewertung notwendig.

Eine weitere bevorzugte Weiterbildung des erfindungsgemäßen Verfahrens ist dabei, dass es sich bei dem verwendeten optischen Sensor um eine RGB-Kamera handelt.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: ein Beispiel des Aufbaus einer Bogen-Inkjet-Druckmaschine
- Figur 2:: ein schematisches Beispiel einer white line, verursacht durch eine missing nozzle
- Figur 3:: den Aufbau des erfindungsgemäßen Druckdüsentestmusters mit beiden Elementen
- Figur 4:: einen schematischen Ablauf des erfindungsgemäßen Verfahrens

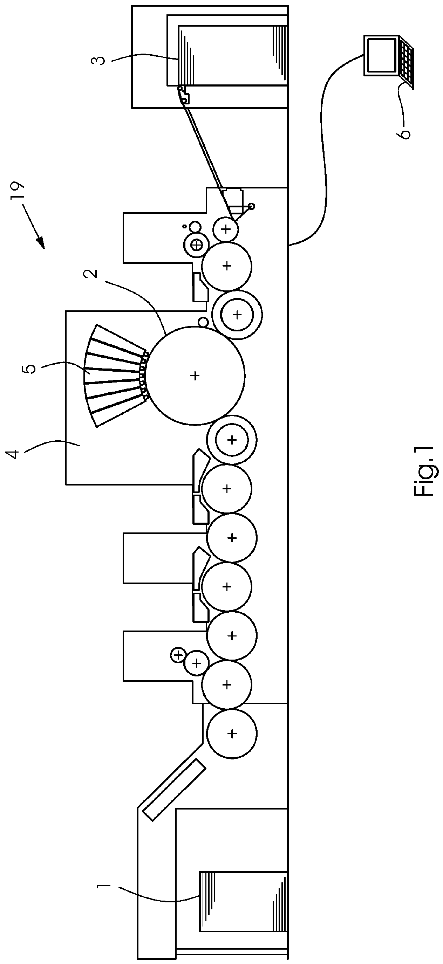

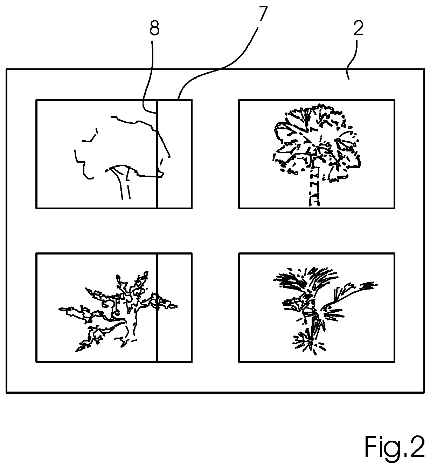

Das Anwendungsgebiet der bevorzugten Ausführungsvariante ist eine Inkjet-Druckmaschine 19. Ein Beispiel für den grundlegenden Aufbau einer solchen Maschine 19, bestehend aus Anleger 1 für die Zufuhr des Drucksubstrats 2 in das Druckwerk 4, wo es von den Druckköpfen 5 bedruckt wird, bis hin zum Ausleger 3, ist in Figur 1 dargestellt. Dabei handelt es sich hier um eine Bogen-Inkjetdruckmaschine, welche von einem Steuerungsrechner 6 kontrolliert wird. Beim Betrieb dieser Druckmaschine 19 kann es, wie bereits beschrieben, zu Ausfällen einzelner Druckdüsen in den Druckköpfen 5 im Druckwerk 4 kommen. Folge sind dann white lines 8, bzw. im Falle eines mehrfarbigen Drucks, verzerrte Farbwerte. Ein Beispiel einer solchen white line 8 in einem Druckbild 7 ist in Figur 2 dargestellt.

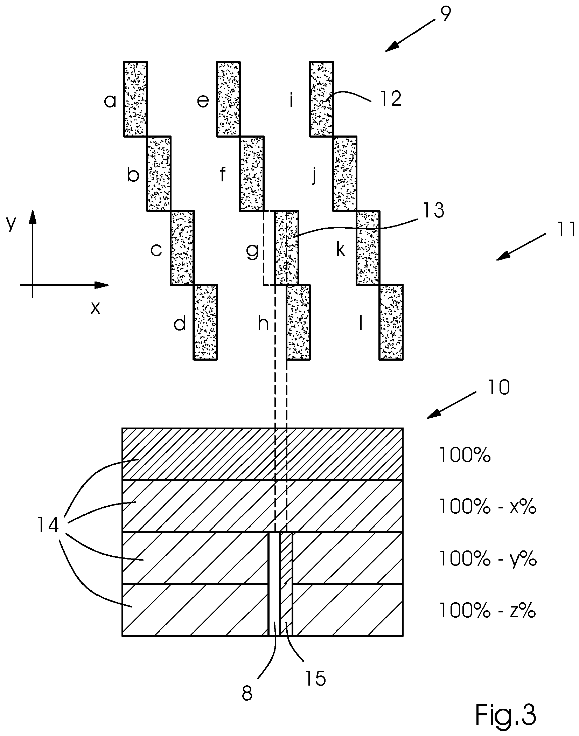

Das erfindungsgemäße Druckdüsentestmuster 11 in seiner bevorzugten Ausführungsvariante wird in Figur 3 vorgestellt. Wie sehr gut zu sehen ist, sind hier die beiden Elemente des Düsentestmusters 9, 10 übereinander angeordnet. Die Richtung X gibt dabei die Substratbreite an, während die Richtung Y die Druckrichtung markiert. Im oberen Teil von Figur 3 ist das erste Element des Düsentestmusters 9 dargestellt. Es besteht in diesem Fall aus vier horizontalen Zeilen der vertikal gedruckten gleichabständigen Linien 12. Vier Zeilen bedeutet in dem Fall, dass jede vierte Druckdüse in jeder Zeile am Druck der vertikalen Linien 12 beteiligt ist. Dies ist in Figur 3 sehr gut durch die Bezifferung der jeweiligen vertikalen Linien 12 als A, E und I zu erkennen. In der zweiten Zeile sind entsprechend die Druckdüsen B sowie F und J vorhanden. Entsprechend geht es für die Zeilen 3 und 4 weiter. Im vorliegenden Beispiel in Figur 3 ist hier nun die vertikale Linie 13 der Düse G, welche sich in der dritten Zeile in der Mitte befindet, leicht nach rechts verschoben. Es handelt sich also um eine missing nozzle 17. Anhand des ersten Elementes des Düsentestmusters 9 in der bevorzugten Ausführungsvariante lässt sich diese verschoben druckende missing nozzle 17 durch Auswertung des ersten Elements des Düsentestmusters 9 leicht detektieren. Erfindungsgemäß kommt nun zum ersten Element des Düsentestmusters 9 das darunter angeordnete zweite Element des Düsentestmusters 10 hinzu. Dieses ist direkt unterhalb des ersten Elements des Düsentestmusters 9 in der gleichen horizontalen Breite wie das erste Element des Düsentestmusters angeordnet. Es besteht aus mehreren, in Druckrichtung untereinander angeordneten Streifen mit jeweils unterschiedlicher Flächendeckung 14. In Figur 3 sind dies vier verschiedene Flächendeckungen, beginnend mit einer hundertprozentigen Flächendeckung und danach abwärts mit jeweils nachlassender Flächendeckung in Form von 100 - X, Y oder Z. Gemäß der Anordnung mit nachlassender Flächendeckung ist dabei X < Y < Z. Es können jedoch beliebig viele Streifen mit unterschiedlichen Flächendeckungen 14 verwendet werden. In diesem zweiten Element des Druckdüsentestmusters 10 lässt sich nun sehr gut erkennen, dass die schräg spritzende Düse G für die verschiedenen Flächendeckungen 14 verschiedene Auswirkungen hat. Im vorliegenden Beispiel, in Figur 3, ist die größte Auswirkung jene bei der Flächendeckung von 100 - Y im dritten Streifen, sowie eine geringere Wirkung im vierten Streifen. Durch die schräg spritzende Düse G wird dabei jeweils eine white line 8 und daneben angeordnet eine dark line 15 erzeugt, die dadurch entsteht, dass die schräg spritzende Düse G in dem Bereich, wo sie entsprechend Tinte auftragen soll, keine oder zu wenig Tinte aufträgt und im benachbarten Bereich entsprechend zuviel. Bei der hundertprozentigen Flächendeckung am obersten Streifen, sowie der höheren Flächendeckung im zweiten Streifen, fällt der Ausfall eher weniger ins Gewicht, da hier durch den Druck mit voller Tintenmenge die doppelt vorhandene Tintenmenge von der dark line 15 in den Bereich der white line 8 hinüber läuft und so diesen fehlenden Bereich teilweise mit abdeckt. Bei der niedrigsten Flächendeckung im untersten Streifen sind die Auswirkungen der fehlspritzenden Düse G geringer, da hier die Flächendeckung so niedrig ist, dass white 8 und dark line 15 vor dem ohnehin hellen Bildinhalt 7 kaum auffallen.

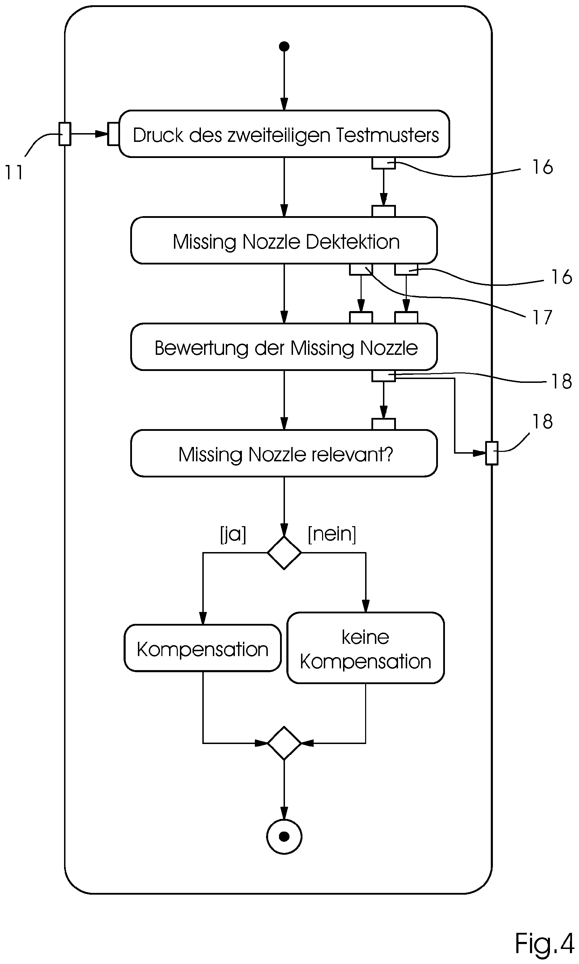

Mit diesem erfindungsgemäßen zweiteiligen Düsentestmuster 11 lässt sich nun der bisherige Ablauf der missing nozzle-Detektion erfindungsgemäß anpassen. Der Ablauf dieses erfindungsgemäßen Verfahrens wird beispielhaft in Figur 4 schematisch dargestellt. In einem ersten Schritt wird ein Druck des zweiteiligen Druckdüsentestmusters 11 durchgeführt. Dann wird das gedruckte Druckdüsentestmuster 16 in seiner erfindungsgemäßen zweiteiligen Form, automatisiert durch eine RGB-Kamera, aufgenommen und digitalisiert und hinsichtlich des Vorhandenseins von missing nozzles 17 vom Rechner 6 untersucht. Wird eine oder mehrere missing nozzle 17 entdeckt, so werden dann in einem nächsten Schritt die Auswirkungen dieser missing nozzles 17 im zweiten Teil des Druckdüsentestmusters für jeweils die verschiedenen Flächendeckungen 14 im Rechner 6 untersucht. Lässt sich dabei im digitalisierten, von der Kamera aufgenommenen Druckbild im Bereich des zweiten Elements des Druckdüsentestmusters 10 in einer oder mehrerer der vorhandenen Streifen mit den unterschiedlichen Flächendeckungen 14 an der durch die Auswertung des ersten Elements des Druckdüsentestmusters 9 bekannten Stelle der missing nozzles 17 ein entsprechendes Artefakt in relevanter, d.h. bestimmte Kriterien erfüllender, Weise feststellen, so wird diese missing nozzle 17 für diese entsprechende Flächendeckung als relevant eingestuft. Im nächsten verfahrensgemäßen Schritt werden dann die als relevant bewerteten missing nozzles 18 im eigentlichen Fortdruckprozess der Inkjet-Druckmaschine 19 durch den Rechner 6 kompensiert, während die nicht relevant markierten missing nozzles nicht kompensiert, das heißt ignoriert werden. Da die Kompensation von ausgefallenen Druckdüsen, das heißt missing nozzles 17, direkt auf der rechnergestützten Ebene der Ansteuerung der einzelnen Druckdüsen geschieht, bevorzugt durch Anweisung an die benachbarten Druckdüsen zum Drucken mit erhöhter Tintenmenge, lässt sich die rechnergestützte Ansteuerung der einzelnen Druckdüsen zur Kompensation einer missing nozzle direkt an die jeweils zu druckende Flächendeckung koppeln. Denn da die Flächendeckung, die von einer Druckdüse erreicht werden soll, logischerweise bekannt sein muss, ist es ein leichtes, den Kompensationsbefehl an die jeweils benachbarten Druckdüsen von der bekannten, zu erreichenden Flächendeckung abhängig zu machen. Damit kann eine Kompensation nur von relevanten missing nozzles 17 für die entsprechenden Flächendeckungen erfindungsgemäß umgesetzt werden.

### Bezugszeichenliste

- 1: Anleger
- 2: Drucksubstrat
- 3: Ausleger
- 4: Inkjet-Druckwerk
- 5: Inkjet-Druckkopf
- 6: Rechner
- 7: Nutzen / Druckbild
- 8: white line
- 9: erstes Element des Druckdüsentestmusters
- 10: zweites Element des Druckdüsentestmusters
- 11: zweiteiliges Druckdüsentestmuster
- 12: vertikale, gleichabständige Linie
- 13: durch missing nozzle abweichende vertikale, gleichabständige Linie
- 14: Streifen mit verschiedener Flächendeckung
- 15: dark line
- 16: gedrucktes, zweiteiliges Druckdüsentestmuster
- 17: detektierte missing nozzle(s)
- 18: Relevanz-Information der detektierten missing nozzle(s)
- 19: Inkj et-Druckmaschine

## Patentansprüche

1. Druckdüsentestmuster (11) für eine Inkjetdruckmaschine (19), welches aus einem ersten Element (9) mit einer bestimmten Anzahl horizontaler Zeilen periodisch vertikal gedruckter, gleichabständiger Linien (12) besteht, die untereinander angeordnet sind, wobei in jeder Zeile des ersten Elements des Düsentestmusters (9) jeweils nur periodisch die Druckdüsen des Druckkopfes (5) der Inkjetdruckmaschine (19) zum ersten Element des Düsentestmusters (9) beitragen, die der bestimmten Anzahl der horizontalen Zeilen entsprechen und wobei das Düsentestmuster (11) zusätzlich ein zweites Element (10) mit Streifen unterschiedlicher Flächendeckungen (14) enthält
**dadurch gekennzeichnet,**
**dass** die Streifen unterschiedlicher Flächendeckungen (14) des zweiten Elementes des Düsentestmusters (10) mit mehreren verwendeten Prozessfarben realisiert sind, wobei dies den Druck mehrerer zweiter Elemente des Düsentestmusters (10) für jeweils mehrere der verwendeten Prozessfarben beinhaltet und/oder den Druck eines zweiten Elementes des Düsentestmusters (10) durch Übereinanderdruck mehrerer der verwendeten Prozessfarben.

2. Druckdüsentestmuster nach Anspruch 1,
**dadurch gekennzeichnet,**
**dass** das zweite Element des Düsentestmusters (10) mit den Streifen unterschiedlicher Flächendeckungen (14) direkt oberhalb oder unterhalb des ersten Elements des Düsentestmusters (9) gedruckt wird und es (10) die gleiche Breite orthogonal zur Druckrichtung wie das erste Element des Düsentestmusters aufweist.

3. Druckdüsentestmuster nach einem der vorherigen Ansprüche,
**dadurch gekennzeichnet,**
**dass** im zweiten Element des Düsentestmusters (10) die Streifen unterschiedlicher Flächendeckungen (14) in absteigender oder aufsteigender Flächendeckung untereinander angeordnet sind.

4. Druckdüsentestmuster nach einem der vorherigen Ansprüche 1 bis 3,
**dadurch gekennzeichnet,**
**dass** im zweiten Element des Düsentestmusters (10) die Streifen unterschiedlicher Flächendeckungen (14) als Flächendeckungskeil mit beliebig vielen Flächendeckungswerten ausgeführt werden.

5. Druckdüsentestmuster nach einem der vorherigen Ansprüche,
**dadurch gekennzeichnet,**
**dass** die Streifen unterschiedlicher Flächendeckungen (14) des zweiten Elementes des Düsentestmusters (10) von sämtlichen vorhandenen Druckdüsen des jeweiligen Druckkopfes (5) erzeugt werden müssen.

6. Verfahren zur Detektion und Kompensation ausgefallener Druckdüsen (17) in einer Inkjetdruckmaschine (19) mit einem Rechner (6), die folgenden Schritte umfassend:
• Druck eines Düsentestmuster (11) gemäß einem der vorherigen Ansprüche
• Messung des gedruckten Düsentestmusters (16) durch einen optischen Sensor und Auswertung des gemessenen Düsentestmusters durch den Rechner (6), wobei anhand des ersten Elements des Düsentestmusters (9) ausgefallene Druckdüsen detektiert und hinsichtlich ihrer Position im Druckkopf (5) identifiziert werden
• Rechnergestützte Bewertung ob detektierte ausgefallene Druckdüsen (17) für ein aktuelles Druckbild (7) relevant sind, wobei für jeden Streifen unterschiedlicher Flächendeckungen (14) im zweiten Element des Düsentestmusters (10) untersucht wird, ob Auswirkungen der detektierten ausgefallenen Druckdüsen (17) auf das Druckbild (7) bei entsprechender Flächendeckung vorhanden sind
• Markierung der detektierten ausgefallenen Druckdüsen als relevant (18) durch den Rechner (6), die im jeweils aktuellen Druckbild (7) relevante Flächendeckungen drucken
• Kompensation der als relevant bewerteten detektierten ausgefallenen Druckdüsen (18) für das aktuelle Druckbild (7)

7. Verfahren nach Anspruch 6,
**dadurch gekennzeichnet,**
**dass** es sich bei dem verwendeten optischen Sensor um eine RGB-Kamera handelt.
